# EUROPÄISCHE PATENTSCHRIFT

(11) **EP 0 739 665 B1**
(45) Veröffentlichungstag und Bekanntmachung des Hinweises auf die Patenterteilung: **28.07.1999**
(21) Anmeldenummer: 96105310.5
(22) Anmeldetag: 03.04.1996
(51) Int. Cl.: B21K 1/76, B21J 5/12, B21K 1/06

(54) **Verfahren zur Herstellung einer Nut an Zapfen von Werkstücken oder an Enden von Wellen oder Achsen**
Method for the production of a groove on the journals of workpieces or on the ends of shafts or axles
Procédé pour la fabrication d'une rainure sur les tourillons de pièces ou sur les extrémités d'arbres ou d'axes

(30) Priorität: 28.04.1995 DE 19515213
(43) Veröffentlichungstag der Anmeldung: 30.10.1996
(73) Patentinhaber: Fried. Krupp AG Hoesch-Krupp, 45143 Essen (DE)
(72) Erfinder: Jakob, Konrad, 6824 Schlins (AT); Hasler, Rudolf, 9485 Nendeln (LI)

(56) Entgegenhaltungen:
- US-A- 3 999 417

## Beschreibung

Die Erfindung betrifft ein verfahren gemäß dem Oberbegriff des Anspruchs 1 (siehe z.B. US-A-3 999 417).

Es ist bekannt, Werkstücke wie Tripoden, Gelenkkreuze, Gelenkinnenteile, vgl. DE 42 40 131 C2, Kugelnaben oder Wellen und Achsen durch spanloses Fließpressen herzustellen. Diese Werkstücke werden zur lagesicheren Verbindung mit zugeordneten Elementen mit Ringnuten versehen, in die Sicherungsringe eingesetzt werden, um die zu verbindenden Werkstücke und Elemente gegeneinander zu fixieren.

Die DE 42 40 131 C2 zeigt z.B. die Verbindung eines Gelenkinnenteils mit einer Aritriebswelle, wobei das Ende der Antriebswelle eine derartige Nut aufweist, in die nach Einstecken der Antriebswelle in das Gelenkinnenteil ein Sicherungsring eingelegt wird, der dann Antriebswelle und Gelenkinnenteil gegeneinander fixiert.

Auch ist es z.B. bekannt, die Enden von Zapfen an Tripoden mit ringförmigen Nuten zu versehen, in die nach dem Aufschieben z.B. von Nadellagern auf die Zapfen ebenfalls jeweils ein Sicherungsring eingelegt wird, der das Nadellager auf dem Zapfen sicher fixiert.

Diese Nuten werden in allen Fällen nach dem Ausformen des Werkstückes in einem zusätzlichen separaten und aufwendigen Arbeitsgang in konventioneller Weise durch spanende Formgebung wie Drehen, Fräsen oder Schleifen hergestellt.

Aus der JP 61-162 240 A ist ein Verfahren zum Warmfließpressen von Werkstücken mit langen Verjüngungen bekannt, bei dem mit zwei gegeneinander bewegbaren Stempeln gearbeitet wird. Dieser Stand der Technik kann aber keinen Hinweis auf das Herstellen von schmalen ringförmigen Nuten an einem durch Fließpressen hergestellten Werkstück in einer geschlossenen Matrize geben.

Hiervon ausgehend, liegt der Erfindung die Aufgabe zugrunde, ein Verfahren der eingangs genannten Art so zu verbessern, daß sich die Herstellung der Werkstücke mit Nuten vereinfacht und die Sicherheit der mittels der Sicherungsringe hergestellten Verbindung von Werkstück und korrespondierendem Element davon unberührt bleibt.

Nach der Erfindung wird die Aufgabe in Verbindung mit den Oberbegriffsmerkmalen durch die im kennzeichnenden Teil des Anspruchs 1 angegebenen Merkmale gelöst. Vorteilhafte und zweckmäßige Verfahrensschritte sind in den Ansprüchen 2 bis 4 angegeben.

Der Vorteil des erfindungsgemäßen Verfahrens besteht insbesondere darin, daß ein Werkstück der genannten Art mit einer Nut in einem einzigen Arbeitsgang in Endmaßform hergestellt werden kann.

Nachfolgend wird die Erfindung anhand von in der Zeichnung schematisch dargestellten Ausführungsbeispielen näher erläutert.

Es zeigt
- Fig. 1: einen Teil eines Tripodezapfens in Verbindung mit einem Nadellager,
- Fig. 2 bis 6: Herstellungsstufen der Tripode,
- Fig. 7: eine Variante des durch die Fig. 2 bis 6 dargestellten Verfahrens, bei dem ein Stempel von außen zugeführt wird,
- Fig. 8: eine Tripode mit einer partiell ausgebildeten Nut und einem partiell ausgebildeten Endwulst,
- Fig. 9: einen Teil einer Welle in Verbindung mit einem Gelenkinnenteil,
- Fig. 10: einen Teil einer Matrize zur Ausformung des Wellenprofils,
- Fig. 11: eine Variante der Matrize zur Ausformung der Nut,
- Fig. 12 bis 15: Herstellungsstufen der Welle.

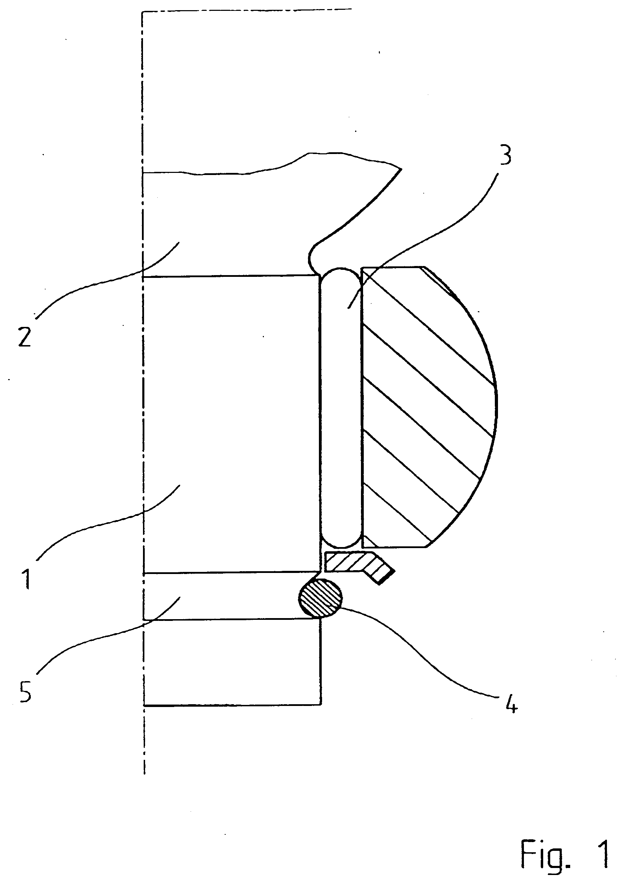

Wie aus der Fig. 1 hervorgeht, ist auf einem Zapfen 1 z.B. einer Tripode 2 ein Nadellager 3 montiert, das mittels eines Sicherungsringes 4, der in einer Nut 5 am Ende des Zapfens 1 eingelegt ist, auf dem Zapfen 1 der Tripode 2 gesichert wird.

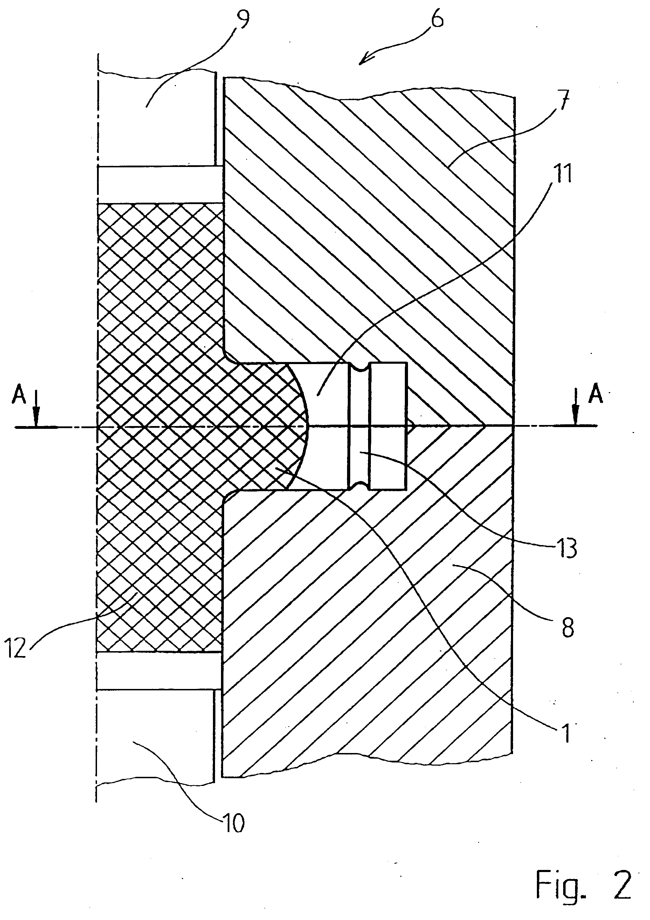

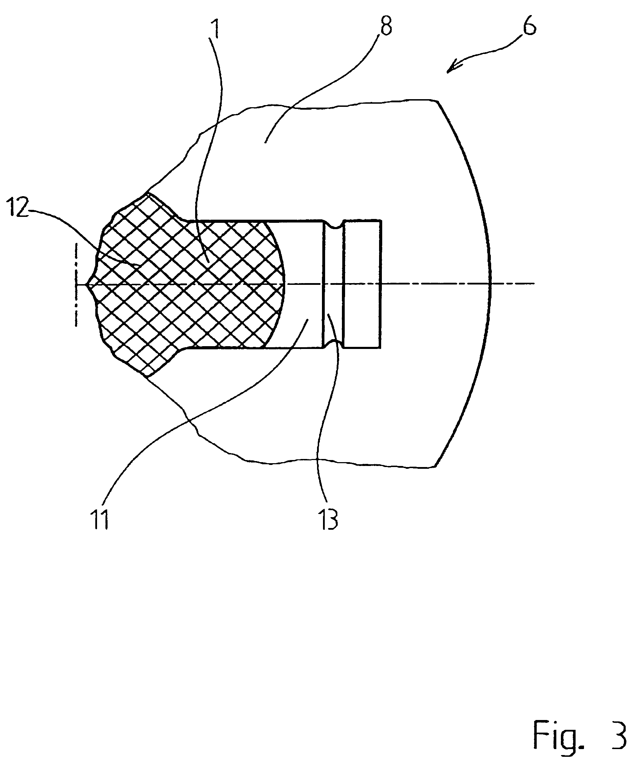

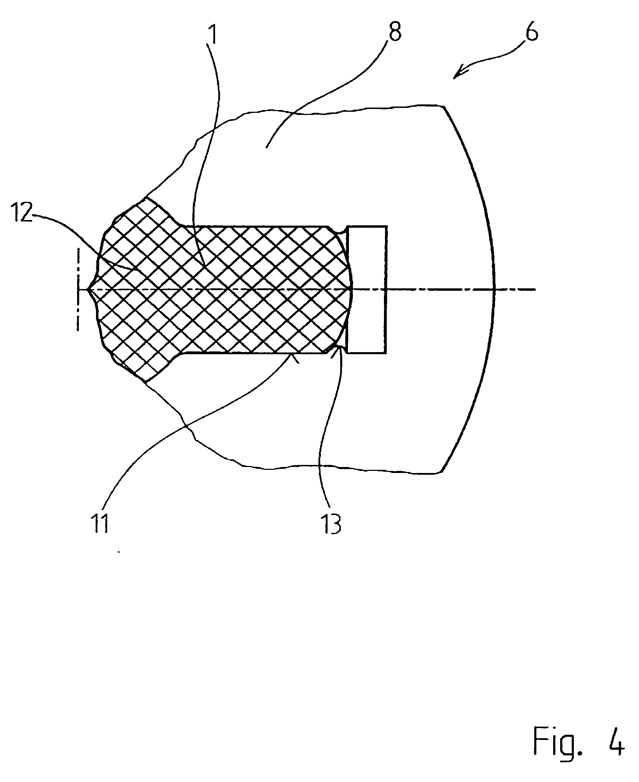

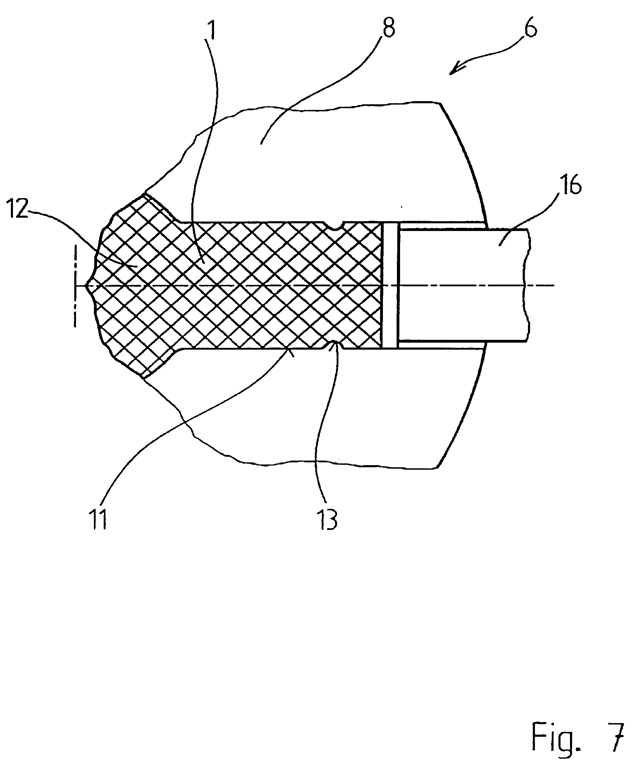

In den Fig. 2 bis 6 bzw. in einer Variante durch die Fig. 7 ist ein Verfahren zur Herstellung einer Tripode 2 mit Nut 5 dargestellt, wobei in der Fig. 2 eine zweigeteilte Matrize 6 mit Oberteil 7 und Unterteil 8 zur Herstellung der Tripode 2 durch Fließpressen dargestellt ist, wobei durch Einführen des oberen Stempels 9 und unteren Stempels 10 der Werkstoff 12 radial nach außen durch eine konturierte Werkzeugöffnung 11 verdrängt wird unter Bildung eines nach außen wachsenden Zapfens 1 mit einem der Werkzeugöffnung 11 entsprechenden Querschnittprofil. Das frei fließende Ende des Zapfens 1 bildet eine sphärische Kuppe (Fig. 3).

Die Fig. 3 bis 7 stellen Teilschnitte durch die Matrize 6 entsprechend der Linie A-A in Fig. 2 dar.

Die Fig. 3 bis 5 zeigen, daß das Ende des Zapfens 1 auf eine Querschnittsverjüngung 13 in der Matrize 6 aufläuft.

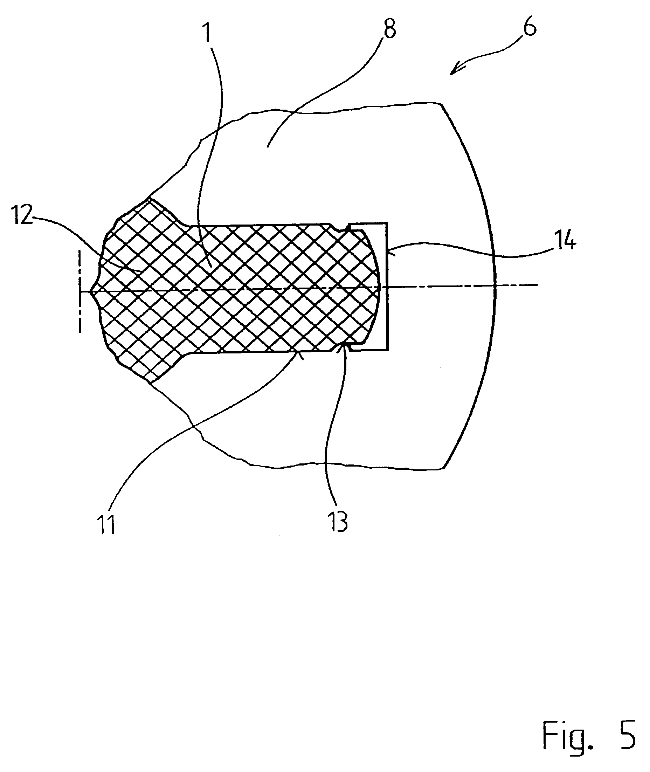

Nach Passieren der Verjüngung 13 (Fig. 5) läuft der austretende Werkstoff mit der Form der Verjüngung 13 mit kleinerem Querschnitt in Richtung der Zapfenachse weiter.

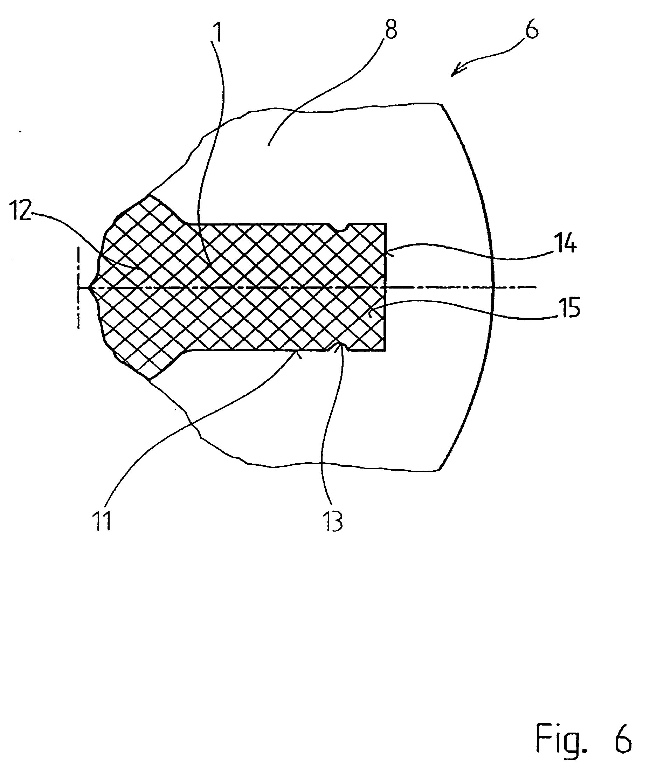

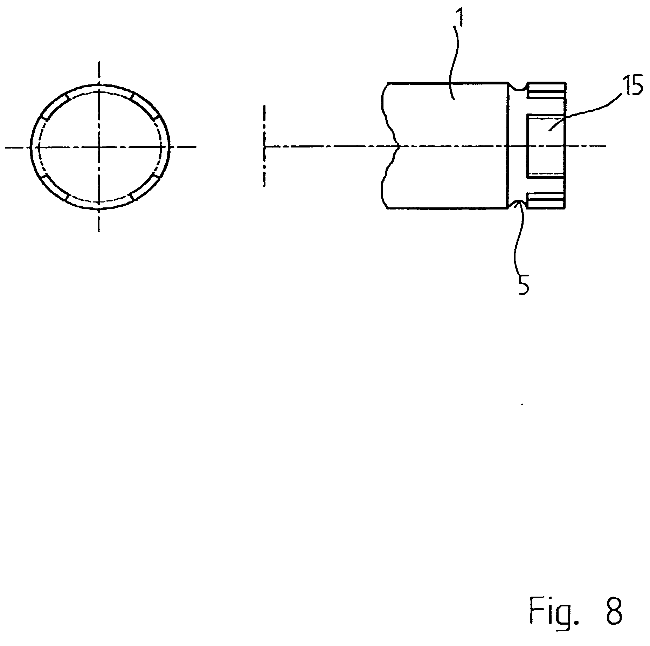

In der Folge läuft der verjüngte Werkstofffluß in Richtung der Zapfenachse auf ein Formelement 14 auf und wird dadurch örtlich radial zur Zapfenachse nach außen aufgestaucht. Je nach Geometrie des Formelementes, wird ein partiell (Fig. 8) oder umlaufender Endwulst 15 (Fig. 6) am Zapfen 1 hinter der Verjüngung 13 ausgebildet. Bei einem partiell ausgebildeten Endwulst ergibt sich ebenfalls eine lediglich partiell ausgebildete Nut 5.

Der aufgestauchte partielle oder ringförmige Wulst 15 bildet zum Zapfenende hin eine dünnwandige Begrenzung einer Vertiefung im Zapfen 1 mit dem Querschnitt der Verjüngung 13, was als Nut zur Fixierung eines Sicherungsrings herangezogen werden kann.

Durch das Formelement 14 oder einen von außen eingeführten Gegenstempel 16 (Fig. 7), das bzw. der den Werkstofffluß in Zapfenrichtung beschränkt, erfolgt zugleich eine Begrenzung der Zapfenlänge und es kann ein Fressen des Zapfens auf Fertigmaß erreicht werden.

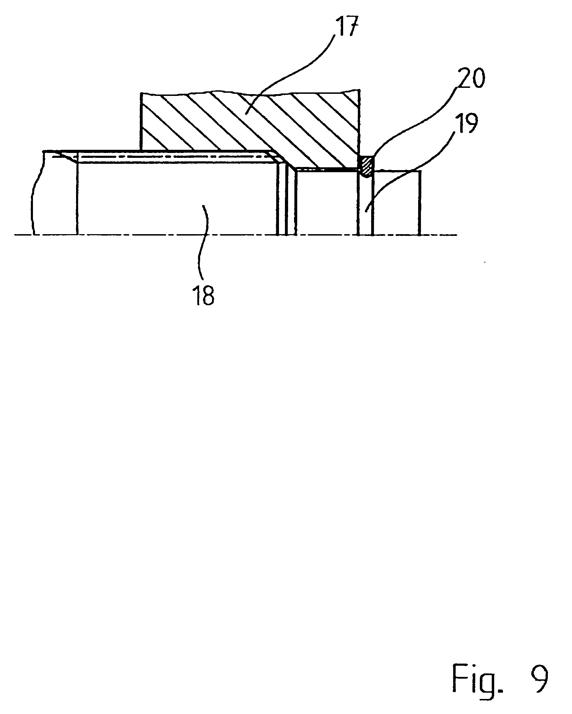

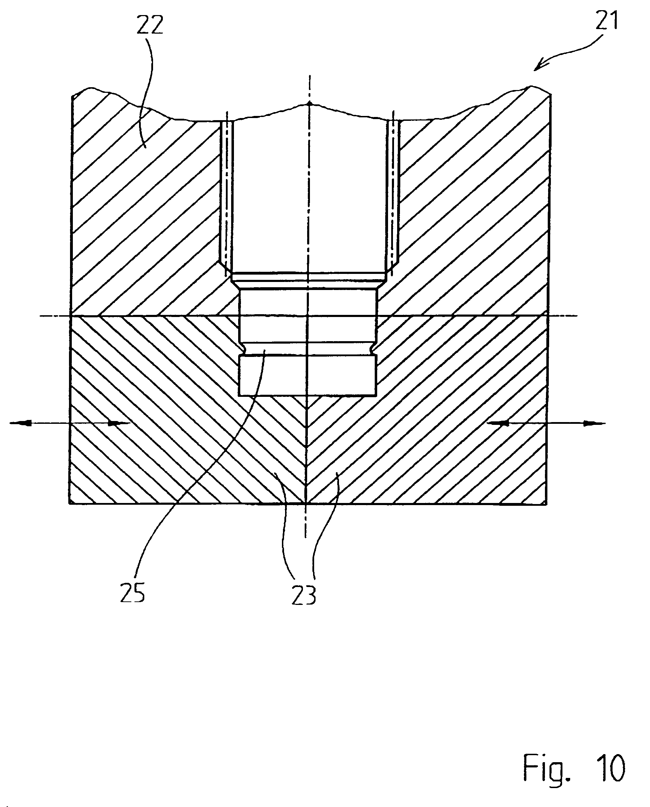

Die Fig. 9 zeigt eine Verbindung eines Gelenkinnenteils 17 mit einer Welle 18, wobei das Gelenkinnenteil 17 auf der Welle 18 mittels eines in einer Nut 19 eingelegten Sicherungsringes 20 lagesicher fixiert ist. Die Fig. 10 stellt eine mehrteilige Matrize 21 zur Herstellung eines Wellenprofils mit endseitiger Nut 19 dar, die einen oberen Teil 22 für die Ausformung des Wellenprofils mit Verzahnung und einen zweiteiligen unteren Teil 23 für die Ausformung der Nut 19 mittels einer ringförmigen Verjüngung 25 aufweist.

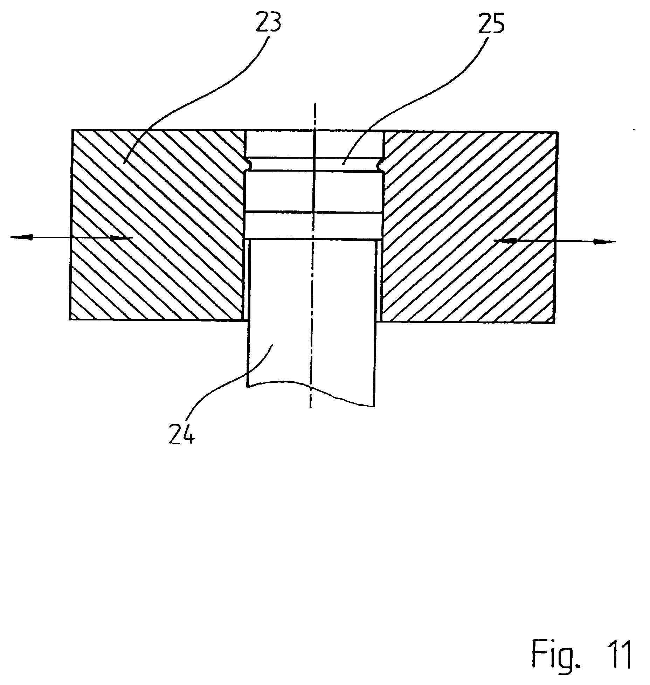

In der Fig. 11 ist eine Variante einer zweiteiligen unteren Matrize 23 für die Ausformung der Nut 19 gezeigt, bei der zur Ausformung des Endes der Welle 18 ein Gegenstempel 24 in die Matrize 23 eingeführt ist.

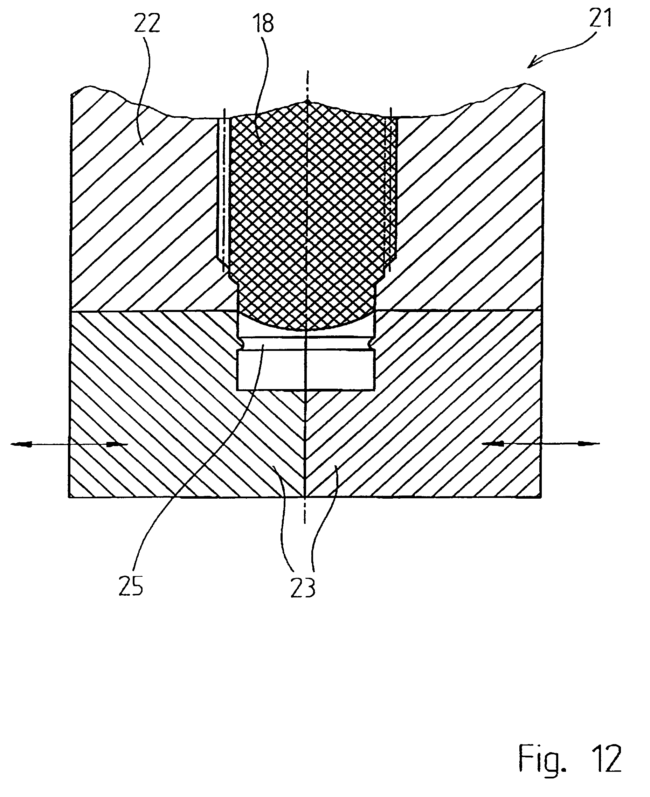

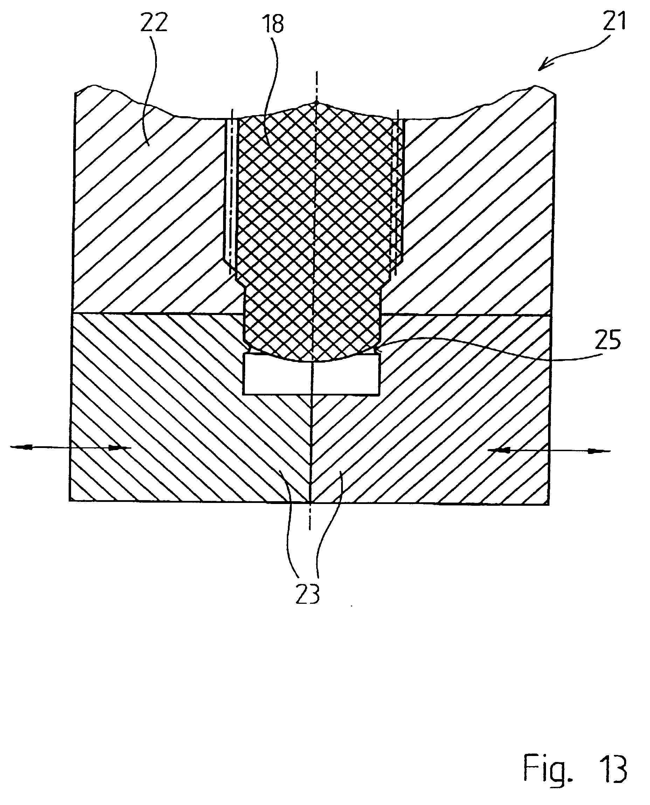

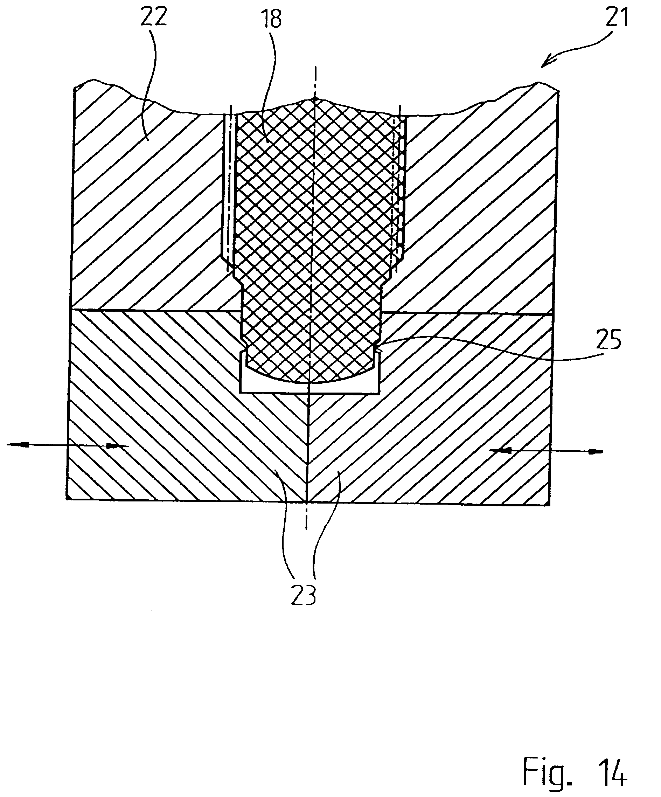

Die Fig. 12 zeigt zunächst die Profilierung der Welle 18 durch Fließpressen in der Matrize 21, wonach der Werkstoff auf die ringförmige Verjüngung 25 aufläuft (Fig. 13) und entsprechend verjüngt weiterläuft (Fig. 14).

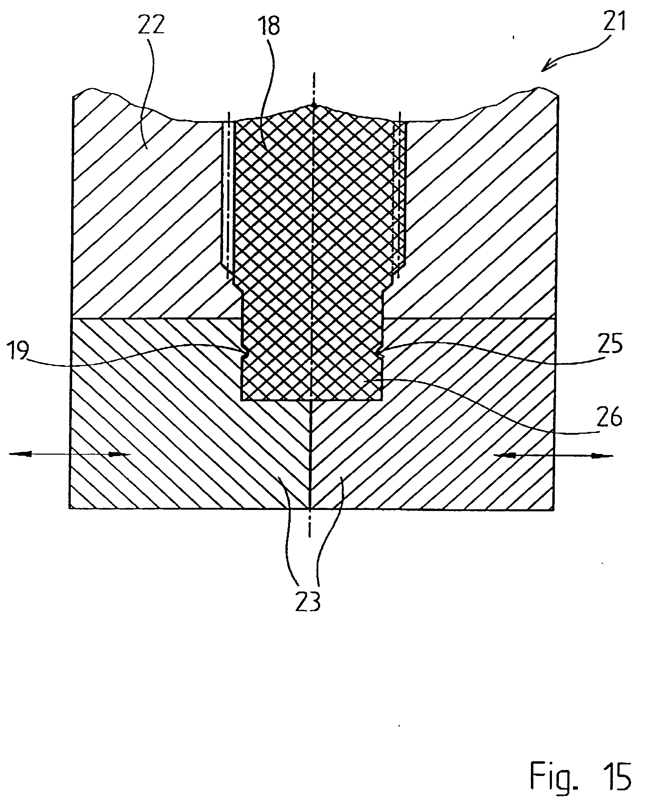

Schließlich ist in der Fig. 15 das Ausformen des Endwulstes 26 am Ende der Welle 18 und der Nut 19 durch Aufstauchen dargestellt.

### Bezugszeichenliste

- 1: Zapfen
- 2: Tripode
- 3: Nadellager
- 4: Sicherungsring
- 5: Nut
- 6: zweigeteilte Matrize
- 7: Matrizenoberteil
- 8: Matrizenunterteil
- 9: oberer Stempel
- 10: unterer Stempel
- 11: konturierte Werkzeugöffnung
- 12: Werkstoff
- 13: Querschnittsverjüngung
- 14: Formelement
- 15: Endwulst
- 16: Gegenstempel
- 17: Gelenkinnenteil
- 18: Welle
- 19: Nut
- 20: Sicherungsring
- 21: mehrteilige Matrize
- 22: oberes Matrizenteil
- 23: zweiteiliges unteres Matrizenteil
- 24: Gegenstempel
- 25: ringförmige Verjüngung
- 26: Endwulst

## Patentansprüche

1. Verfahren zur Herstellung einer ringförmigen Nut (5) für die Aufnahme von Sicherungsmitteln wie Ringen (4) an den freien Enden von Zapfen (1) oder an den Enden von Wellen oder Achsen an Werkstücken wie Tripoden, Gelenkkreuzen, Gelenkinnenteilen oder Wellen und Achsen, wobei die Werkstücke durch Fließpressen hergestellt werden, **dadurch gekennzeichnet,** daß die Nut (5) an den Enden von Zapfen oder Wellen oder Achsen beim Herstellen der Werkstücke durch gezielte Steuerung des Stoffflusses durch entsprechend mit einem Ringwulst ausgestaltete Matrizeninnenkonturen angeformt wird, wobei der Werkstoff am Ende des Zapfens oder der Welle oder der Achse auf ein beim Pressvorgang ortsfest fixiertes Formelement (14) aufläuft und örtlich radial nach außen aufgestaucht wird.

2. Verfahren nach Anspruch 1, **dadurch gekennzeichnet,** daß das Formelement (14) zur Ausbildung der Zapfen- bzw. Wellenendgeometrie durch eine entsprechende Ausformung der Matrize selbst erreicht wird.

3. Verfahren nach Anspruch 1, **dadurch gekennzeichnet,** daß das Formelement (14) zur Ausbildung der Zapfen- bzw. Wellenendgeometrie durch einen entsprechend ausgeformten Matrizeneinsatz erreicht wird.

4. Verfahren nach Anspruch 1, **dadurch gekennzeichnet,** daß das Formelement (14) zur Ausbildung der Zapfen- bzw. Wellenendgeometrie durch einen von außen zugeführten Stempel (16, 24) erreicht wird.

## Claims

1. Method of producing an annular groove (5) for receiving securing means such as rings (4) on the free ends of pivot pins (1) or on the ends of shafts or axles on workpieces such as tripods, universal joints, link inner parts or shafts and axles, said workpieces being produced by extrusion, characterised in that the groove (5) on the ends of the pivot pins or shafts or axles is formed as an integral part during the manufacture of the workpieces by virtue of purposefully controlling the material flow through inner contours of a die, the said inner contours being suitably designed with an annular bead, wherein the material at the end of the pivot pin or the shaft or the axle runs up a forming member (14), which is fixed in a stationary manner during the shaping by pressing procedure, and said material is urged in a localized manner upwards radially outwards.

2. Method according to claim 1, characterised in that in order to achieve the geometry of the pivot pin or shaft end the forming member (14) is produced by virtue of correspondingly shaping the die itself.

3. Method according to claim 1, characterised in that in order to achieve the geometry of the pivot pin or shaft end the forming member (14) is produced by virtue of a correspondingly shaped die insert.

4. Method according to claim 1, characterised in that in order to achieve the geometry of the pivot pin or shaft end the forming member (14) is produced by virtue of a die (16, 24) applied from the outside.

## Revendications

1. Procédé pour la fabrication d'une rainure (5) de forme annulaire en vue de la réception de moyens de fixation tels que des bagues (4) aux extrémités libres de tourillons (1) ou aux extrémités d'arbres ou d'axes, sur des pièces telles que des trépieds, des croisillons, des pièces intérieures d'articulation ou des arbres ou des axes, dans lequel les pièces sont fabriquées par extrusion, caractérisé en ce que la rainure (5) est formée aux extrémités des tourillons ou des arbres ou des axes lors de la fabrication des pièces, par contrôle approprié de l'écoulement de matière à l'aide de contours intérieurs de la matrice, formée de manière correspondante avec un bourrelet annulaire, la matière à l'extrémité du tourillon ou de l'arbre ou de l'axe butant sur un élément de formage (14) fixé fermement lors du processus de pressage et étant localement refoulée radialement vers l'extérieur.

2. Procédé selon la revendication 1, caractérisé en ce que l'élément de formage (14) en vue de la réalisation de la géométrie de l'extrémité du tourillon ou de l'arbre est obtenu par une mise en forme correspondante de la matrice elle-même.

3. Procédé selon la revendication 1, caractérisé en ce que l'élément de formage (14) en vue de la réalisation de la géométrie de l'extrémité du tourillon ou de l'arbre est obtenu par une garniture de matrice de forme correspondante.

4. Procédé selon la revendication 1, caractérisé en ce que l'élément de formage (14) en vue de la réalisation de la géométrie de l'extrémité du tourillon ou de l'arbre est obtenu par un poinçon (16, 24) amené de l'extérieur.
